# FASCICULE DE BREVET EUROPEEN

(11) **EP 1 786 869 B1**
(45) Date de publication et mention de la délivrance du brevet: **19.06.2019**
(21) Numéro de dépôt: 05770965.1
(22) Date de dépôt: 09.05.2005
(51) Int. Cl.: C09C 1/32

(54) **PROCEDE DE SYNTHESE DE PIGMENTS OUTREMERS**
VERFAHREN ZUR HERSTELLUNG VON ULTRAMARIN-PIGMENTEN
METHOD FOR SYNTHESIZING ULTRAMARINE PIGMENTS

(30) Priorité: 11.05.2004 FR 0405103
(43) Date de publication de la demande: 23.05.2007
(73) Titulaire: Holliday Pigments SA, 59560 Comines (FR)
(72) Inventeur: LELIEUR, Jean-Pierre, V., F-59130 Lambersart (FR); DUHAYON, Christian, L., B-7782 Ploegsteert (BE); HAUTECOEUR, Noëlle, S., F-59130 Lambersart (FR); DEMORTIER, Antoine, M., F-59350 Saint André Lez Lille (FR); LEDE, Bertrand, J., F-59650 Villeneuve D'Ascq (FR); COOPMAN, Patice, J., B-8930 Rekkem (BE); LEGHIE, Patrick, F-59242 Templeuve (FR)
(74) Mandataire: Balesta, Pierre
(86) Numéro de dépôt international: PCT/FR2005/001151
(87) Numéro de publication internationale: WO 2005/121256

(56) Documents cités:
- JP-A- S54 142 238
- US-A- 2 535 057
- DATABASE CA [Online] CHEMICAL ABSTRACTS SERVICE, COLUMBUS, OHIO, US; KOWALAK, S. ET AL: "Zeolite matrices for pigments" XP002313628 extrait de STN Database accession no. 132:209172 & STUDIES IN SURFACE SCIENCE AND CATALYSIS , 125(POROUS MATERIALS IN ENVIRONMENTALLY FRIENDLY PROCESSES), 753-760 CODEN: SSCTDM; ISSN: 0167-2991, 1999,
- DATABASE CA [Online] CHEMICAL ABSTRACTS SERVICE, COLUMBUS, OHIO, US; KOWALAK, STANISLAW ET AL: "Synthesis of ultramarine from synthetic molecular sieves" XP002313629 extrait de STN Database accession no. 123:304993 & COLLOIDS AND SURFACES, A: PHYSICOCHEMICAL AND ENGINEERING ASPECTS , 101(2/3), 179-85 CODEN: CPEAEH; ISSN: 0927-7757, 1995,
- LARRY S. SIMERAL AND PETERH. KRYGSMAN: "Determination of Water in Zeolite AUsing Low-Resolution NMR", APPLIED SPECTROSCOPY, vol. 53, no. 8, 1999, pages 1009-1010,

## Description

Les pigments outremers sont des aluminosilicates de sodium de structure sodalite qui contiennent des espèces soufrées. La sodalite de formule Na₆(Al₆Si₆O₂₄) est formée de cages sodalite (cubooctaèdres tronqués) juxtaposées. Dans cette structure compacte peuvent s'insérer des sels NaX. Les chromophores du pigment outremer sont des polysulfures radicalaires S₃⁻ (bleu) et S₂⁻ (jaune). Ces chromophores sont insérés dans les cages sodalite sous la forme de sels NaS₃ et NaS₂. La teinte des pigments est liée à la concentration de ces chromophores.

Le pigment outremer bleu est la forme synthétique de la pierre semi-précieuse lapis lazuli. Pendant des siècles, un pigment bleu était préparé à partir de cette pierre. Ce pigment de très bonne qualité était toutefois très coûteux et on chercha à le synthétiser par voie chimique. C'est seulement en 1828 que J.B. Guimet découvrit le procédé de synthèse du pigment outremer bleu.

Le procédé actuel de synthèse du pigment outremer bleu, basé sur le procédé découvert par Guimet, consiste à chauffer un mélange de métakaolin, de carbonate de sodium, de soufre et d'un réducteur. Ces réactifs sont mélangés dans les proportions souhaitées, puis sont calcinés dans des fours. Le cycle de température se décompose en plusieurs étapes : un chauffage à 800°C à l'abri de l'air, suivi d'une étape d'oxydation à plus basse température.
Ce procédé produit des pigments outremers bleus de bonne qualité, mais présente plusieurs inconvénients :
- les températures élevées et la durée de synthèse rendent ce procédé coûteux en énergie ;
- au cours du chauffage à l'abri de l'air et du refroidissement, une quantité importante de gaz se dégage : dioxyde de carbone, dioxyde de soufre; le SO₂ doit être traité afin de respecter les normes locales de protection de l'environnement, ce qui accroît le coût de la production;
- les eaux de lavage du pigment brut ont une DCO (demande chimique en oxygène) élevée, à cause de la présence de polysulfures résiduels et de thiosulfate de sodium. Pour respecter les normes locales de protection de l'environnement, ces eaux doivent être traitées avant d'être rejetées;
- la qualité du pigment bleu synthétisé varie en fonction de différents paramètres et en fonction du cycle de température, en particulier au cours de l'oxydation.

Peu après la découverte de la synthèse du pigment outremer bleu, des pigments roses et verts, ayant la même structure que l'outremer bleu et contenant également des espèces soufrées, furent synthétisés. Le brevet US 2 535 057 A décrit une synthèse de pigments outremers par calcination. S. Kowalak et.al. décrivent dans Colloids and Surfaces, A: Physicochemical and Engineering Aspects, 1995, 101(2/3), 179-85 et dans Studies in Surface Science and Catalysis 1999, 125 (Porous materials in Environmentally Friendly Processes), 753-760 des procédés de synthèse de pigments outremers comprenant une étape d'imprégnation des zéolithes avec une solution aqueuse de NaS_{X}.

L'outremer vert a été synthétisé par calcination, à l'abri de l'air, de matières premières similaires à celles utilisées pour la fabrication du bleu outremer. Lors de sa production, on rencontrait des problèmes liés au rejet des eaux de lavage du pigment brut qui contiennent une quantité importante de polysulfures.

La présente invention permet de pallier les inconvénients présentés par les procédés de synthèse de pigments outremers existants. Le but de la présente invention est de proposer un procédé de synthèse de pigments outremers vert et bleu par calcination en une seule étape et qui ne dégage pas de gaz polluants.

Selon un premier aspect, l'invention a trait à un procédé de synthèse de pigments outremers par calcination à l'abri de l'air d'un mélange comprenant de la zéolithe A, du sulfure de sodium et du soufre, caractérisé en ce que :
- la zéolithe A est séchée en préalable jusqu'à une teneur en eau inférieure à 10%, de préférence inférieure à 1% (en poids), et
- le milieu de réaction est exempt d'eau.

Selon diverses réalisations, le procédé de synthèse présente les caractères suivants, le cas échéant combinés :
- le mélange réactionnel comprend du sulfure de sodium anhydre ;
- la température de calcination est comprise entre 500 et 1000°C ;
- la zéolithe séchée est gardée à l'abri de l'humidité jusqu'à la calcination ;
- le mélange réactionnel se caractérise par :
   ∘ un rapport massique S/Na* compris entre 0,87 et 1,74 (Na* étant Na du Na₂S) et
   ∘ les pourcentages massiques suivants :
      ▪ Na₂S/zéo|ithe > 9% et
      ▪ S/zéolithe > 1% ;
   la mise en oeuvre du procédé de synthèse à partir dudit mélange conduisant dans ce cas à l'obtention d'un pigment outremer vert ;
- le mélange réactionnel se caractérise par :
   ∘ un rapport massique S/Na* supérieur à 1,74 ;
   ∘ les pourcentages massiques suivants :
      ▪ 9% < Na₂S/zéolithe
      ▪ 5,6% < S/zéolithe ,
   et comprenant éventuellement des ions hydroxyde, le pourcentage massique ions hydroxyde/zéolithe étant compris entre 0% et 5%;
   la mise en oeuvre du procédé de synthèse à partir dudit mélange conduisant dans ce cas à l'obtention d'un pigment outremer bleu ;
- le temps de calcination est d'au moins 10 h pour les pigments outremers verts et d'au moins 12 h pour les pigments outremers bleus ;
- la réaction de calcination a lieu dans une enceinte étanche, sous vide ou sous gaz inerte.

Selon un second aspect, l'invention a trait à un procédé de synthèse de pigments outremers qui comprend une étape de calcination à l'abri de l'air d'un mélange comprenant de la zéolithe A, éventuellement du sulfure de sodium et/ou du soufre, éventuellement des ions hydroxyde, et des polysulfures de composition formelle Na₂Sₙ, n étant un nombre supérieur à 1, le produit résultant de la réaction de calcination étant refroidi à l'abri de l'air, conduisant à l'obtention d'un produit brut qui comprend le pigment outremer synthétisé, des polysulfures et éventuellement du soufre. Dans ce cas, le procédé de synthèse présente les caractères suivants, le cas échéant combinés :
- les polysulfures Na₂Sₙ participant à la réaction de calcination proviennent au moins en partie du recyclage des polysulfures et éventuellement du soufre présents en excès dans ledit produit brut,
- ledit recyclage comprend les étapes suivantes, réalisées de préférence à l'abri de l'air :
   ∘ solubilisation des polysulfures et éventuellement du soufre présents dans le produit brut par lavage dudit produit brut avec un solvant non aqueux ;
   ∘ séparation du pigment outremer synthétisé, en suspension dans ledit solvant chargé en polysulfures et éventuellement en soufre;
   ∘ évaporation dudit solvant permettant d'obtenir les polysulfures et éventuellement le soufre cristallisés.
- le solvant apte à solubiliser les polysulfures présents dans le produit brut est sélectionné dans le groupe : acétone, acétonitrile, ammoniac, disulfure de carbone, diméthylsulfoxyde, éthanol, méthanol, pyridine, tétrahydrofurane, diméthylformamide, propanol;
- ledit solvant est utilisé de préférence à l'état anhydre ;
- le solvant évaporé est récupéré et réutilisé dans le procédé.

Le pigment outremer présent en suspension dans ledit solvant est séparé par filtration ou tout autre procédé adapté. Le pigment ainsi séparé est soit relavé avec le même solvant selon le même procédé, soit séché afin d'éliminer toute trace de solvant.

Il est également décrit un pigment outremer obtenu par la mise en oeuvre du procédé de synthèse décrit, ledit pigment outremer présentant une teneur en fer inférieure ou égale à 200 ppm.

L'invention va maintenant être décrite en détail.

Les différentes étapes du procédé de synthèse selon l'invention ont lieu à l'abri de l'air. Dans une variante de réalisation, le procédé de synthèse a lieu sous atmosphère inerte, dans une enceinte étanche. Dans une autre variante de réalisation, le procédé de synthèse a lieu dans une enceinte non fermée sous flux continu de gaz inerte. Il est cependant possible de réaliser l'ensemble des étapes du procédé sous vide ou sous air sec et dans des enceintes étanches. Les conditions de travail à l'abri de l'air, tout au long du procédé de synthèse, ont pour effet la réduction drastique de la formation de dioxyde de soufre, le soufre en excès étant transformé en majeure partie en polysulfures.

Le mélange réactionnel comprend, comme réactifs :
i) de la zéolithe A commerciale préalablement séchée. De manière préférée, est utilisée la zéolithe 4A. L'étape de séchage est nécessaire, car la zéolithe A non séchée contient environ 22% (en poids) d'eau. Le demandeur a constaté, et c'est un des mérites de l'invention, que l'utilisation d'une zéolithe séchée contenant moins de 10% d'eau, de préférence moins de 1% (en poids) d'eau, dans le procédé de synthèse de pigments outremers, conduit à l'obtention de pigments de couleur intense, sans dégagement gazeux important.
ii) du sulfure de sodium sous forme anhydre, provenant du commerce. Le demandeur a constaté, et c'est un autre mérite de l'invention, que l'utilisation de sulfure de sodium anhydre, à la place de formes hydratées, utilisées jusqu'à présent pour la synthèse de pigments outremers, contribue, en gardant le milieu réactionnel exempt d'eau, à l'obtention de pigments de couleur intense et à la réduction des quantités de gaz dégagées.
   Sans chercher à comprendre les causes intrinsèques des effets décrits aux points i et ii, on peut supposer qu'au cours du chauffage, l'eau résiduelle contenue dans la zéolithe A sort de la structure dans le milieu réactionnel où elle hydrolyse une partie des polysulfures, ce qui diminue la quantité de chromophores insérables. L'eau peut également hydrolyser les chromophores dans les cages. A l'inverse, l'absence de l'eau dans le milieu réactionnel au cours de la calcination favorise l'insertion des chromophores S₃⁻ et S₂⁻ dans la zéolithe A, et par conséquent l'obtention d'un pigment de meilleure qualité. Par ailleurs, l'absence de l'eau dans le milieu de calcination, combinée à l'absence d'oxygène, empêche la formation de différents gaz (SO₂, H₂S).
iii) du soufre, provenant du commerce.
iv) des polysulfures ou un mélange de polysulfures et de soufre, dans une variante de réalisation. Ces composés sont obtenus, au moins en partie, par la solubilisation, dans un solvant non aqueux, des polysulfures et éventuellement du soufre présents en excès dans le produit brut résultant après le refroidissement du produit de la réaction de calcination, suivie d'une étape d'élimination du pigment en suspension et de l'évaporation dudit solvant. Après détermination de la nature des polysulfures solides obtenus (le polysulfure de degré supérieur le moins réduit, existant à l'état solide à température ambiante, est Na₂S₅; pour les stoechiométries supérieures on obtient donc, après évaporation du solvant, un mélange de polysulfures et de soufre), ils sont mélangés à de la zéolithe et éventuellement à du sulfure de sodium et/ou du soufre pour une nouvelle synthèse.
v) des ions hydroxyde. L'ajout d'ions hydroxyde, sous forme d'un sel hydroxyde (par exemple : NaOH, LiOH, KOH, Ca(OH)₂, Mg(OH)₂) permet de diminuer la durée de calcination ou la température de calcination, dans le cas de la synthèse de pigments outremers bleus. Cependant, plus il y a d'ions hydroxyde, moins la qualité du pigment est bonne. Les pourcentages massiques ions hydroxyde/zéolithe utilisés dans le mélange de calcination sont compris entre 0% et 5%. A titre d'exemple, l'étape de calcination du mélange à 700°C en l'absence d'ions hydroxyde présente une durée supérieure à 72h, alors que l'ajout de NaOH audit mélange avant calcination dans les mêmes conditions réduit cette durée à moins de 24h.

Le procédé de synthèse permet d'obtenir, en une seule étape (de calcination), des pigments outremers de bonne qualité.

Préalablement à la calcination, la zéolithe A est séchée sous vide dans des conditions lui assurant une teneur massique en eau inférieure à 10%, de préférence inférieure à 1%. Par exemple, une température supérieure à 350°C, un séchage sous vide (pression inférieure à 10⁻³ torr) et une durée supérieure à 12h conduisent à l'obtention d'une zéolithe avec une faible teneur en eau.

D'autres conditions conviennent également : séchage sous air, sous vide moins poussé ou sous gaz inerte, ainsi que l'utilisation de tout autre moyen de séchage permettant de réduire la teneur en eau de la zéolithe en-dessous de 10%.

Une fois séchée, la zéolithe est maintenue à l'abri de l'humidité.

Les réactifs entrant dans la composition du mélange de calcination: zéolithe, sulfure de sodium et soufre (facultativement un hydroxyde) sont mélangés à l'abri de l'air. Simultanément au mélange, on peut broyer les réactifs si nécessaire.

La proportion des réactifs dépend du pigment que l'on souhaite obtenir : bleu ou vert. On obtient un pigment vert pour un rapport massique S/Na* compris entre 0,87 et 1,74 (Na* étant Na du Na₂S), avec les pourcentages massiques suivants : Na₂S/zéolithe > 9% et S/zéolithe > 1%. On obtient un pigment bleu pour un rapport massique S/Na* supérieur à 1,74, avec les pourcentages massiques suivants : 9% < Na₂S/zéolithe et 5,6% < S/zéolithe. Pour des rapports S/Na* élevés, les pigments obtenus sont de bonne qualité ; cependant, la proportion de polysulfures en excès augmente.

Si nécessaire, le mélange de réactifs peut être compacté à l'abri de l'air.

L'étape de calcination consiste à chauffer ledit mélange, compacté ou non, à haute température, à l'abri de l'air, dans une enceinte. La température de calcination varie entre 500°C et 1000°C pour obtenir des pigments outremers bleu et vert. Par exemple, avec une zéolithe contenant moins de 1% d'eau, pour un pigment bleu à 850°C il faut environ 12h ; à 750°C il faut environ 48h ; à 700°C il faut entre 72h et 96h. Pour un pigment vert, il faut environ 10h de calcination à 750°C ; à 650°C il faut entre 20h et 30h. Plus la température diminue, plus la durée augmente.

Le produit obtenu à la fin de la calcination est refroidi ou laissé refroidir à l'abri de l'air. Le produit obtenu après refroidissement, appelé produit brut, contient le pigment vert ou bleu et des polysulfures et éventuellement du soufre, en excès.

Dans une variante de réalisation, le procédé de synthèse permet d'obtenir des pigments outremers en utilisant comme réactif dans la réaction de calcination, à côté de la zéolithe, éventuellement du sulfure de sodium et/ou du soufre et éventuellement des ions hydroxyde, un mélange de polysulfures et éventuellement de soufre obtenu au moins en partie par le recyclage des polysulfures et éventuellement du soufre présents en excès dans le produit brut.

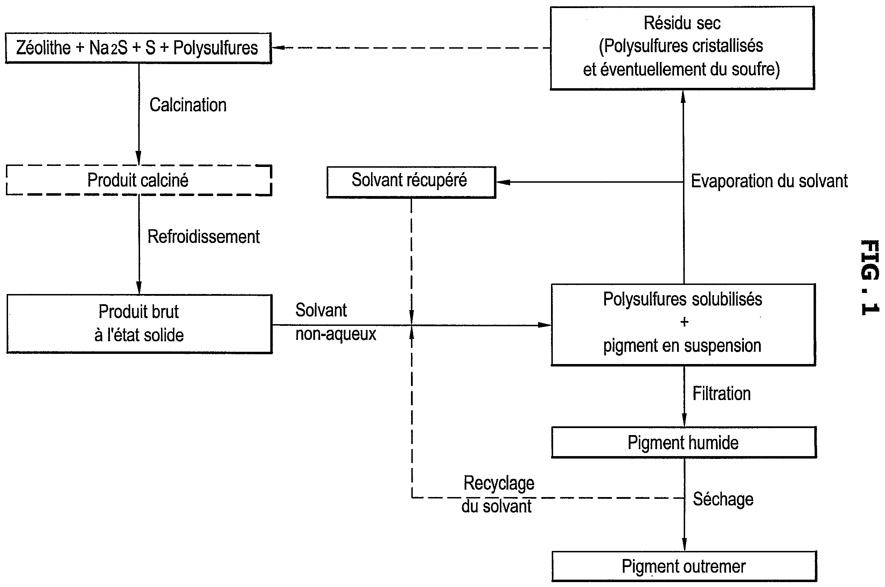

Le recyclage des polysulfures et éventuellement du soufre présents dans le produit brut comporte les étapes suivantes, illustrées dans la figure 1 :
- solubilisation desdits polysulfures et éventuellement du soufre par lavage avec un solvant non aqueux à l'abri de l'air. Le solvant ne doit pas nuire aux caractéristiques colorimétriques du pigment (qui reste en suspension) et doit pouvoir solubiliser les polysulfures et le soufre en excès (qui n'ont pas été insérés dans les cages sodalite) sans que ceux-ci réagissent avec le solvant (solvatation ou oxydation). Plusieurs lavages peuvent être nécessaires pour solubiliser tous les polysulfures et le soufre. Le solvant non aqueux est sélectionné dans le groupe : acétone, acétonitrile, ammoniac, disulfure de carbone, diméthylsulfoxyde, éthanol, méthanol, pyridine, tétrahydrofurane, diméthylformamide, propanol. Il est préférable d'utiliser un solvant anhydre et d'agiter pendant le lavage.
- séparation du pigment présent en suspension dans le solvant non aqueux chargé en polysulfures et en soufre. Cette séparation peut être réalisée par filtration ou toute autre technique appropriée. Elle doit être faite de préférence à l'abri de l'air.
- évaporation du solvant, permettant d'obtenir les polysulfures et éventuellement le soufre, cristallisés sous forme de résidu sec exempt de solvant. Le solvant choisi doit pouvoir s'évaporer sans oxydation des polysulfures, ni formation de solvates. Après détermination du degré de réduction moyen dudit résidu pour l'ajustement des quantités de réactifs, les polysulfures et éventuellement le soufre sont mélangés à de la zéolithe, éventuellement à du sulfure de sodium et/ou du soufre et éventuellement à un hydroxyde pour une nouvelle synthèse. Par ailleurs, le solvant récupéré après évaporation est réutilisé dans le recyclage.

Séparément, le pigment, humide de solvant, est soit relavé avec le même solvant si nécessaire, soit séché directement afin d'éliminer toute trace de solvant.

Les exemples de réalisation suivants, non limitatifs, illustrent plus en détail le procédé de synthèse de pigments outremers.

### Exemple 1

On chauffe 50,6 g de zéolithe 4A sous air à 500°C pendant 48h. On obtient 40 g de zéolithe séchée qui sont conservés à l'abri de l'humidité. On mélange à l'abri de l'air 40 g de zéolithe A séchée, 11 g de Na₂S anhydre, 4,5 g de soufre. Ce mélange est chauffé dans une enceinte étanche remplie d'argon, à 750°C pendant 48h. Après refroidissement, le produit brut obtenu est lavé à l'éthanol. Le produit lavé est vert intense.

### Exemple 2

On mélange et on broie à l'abri de l'air 50 g de zéolithe A séchée, 13,75 g de Na₂S anhydre, 28 g de soufre. Le mélange est chauffé dans une enceinte étanche remplie d'argon à 750°C pendant 48h. Le produit brut obtenu après refroidissement est lavé à l'eau. Le produit lavé est bleu verdâtre intense.

### Exemple 3

On mélange et on broie à l'abri de l'air 28 g de zéolithe A séchée, 7,7 g de Na₂S anhydre et 22,12 g de soufre. Le mélange est chauffé dans une enceinte étanche sous azote à 750°C pendant 48h puis laissé refroidir. Après lavage à l'eau du produit brut, on obtient un pigment bleu rougeâtre intense.

### Exemple 4

Pour chacun des pigments obtenus dans les exemples 2 et 3, on mélange 2 g de TiO₂, 0,4 g de pigment et 0,7 g d'huile de lin. La peinture ainsi formée est étalée sur un support sous forme d'un film d'épaisseur considérée infinie et on détermine les paramètres colorimétriques selon le système CIELAB 1976 :

| | Ex 2 | Ex 3 |
|---|---|---|
| L* | 68,12 | 68,16 |
| C* | 33,41 | 35,37 |
| h | 246,2 | 266,5 |

### Exemple 5

On procède comme dans l'exemple 2 et on lave le produit brut avec de l'eau dans les proportions 1 kg/L. On mesure la DCO de l'eau de lavage : on obtient 346700 mg O₂/L.

### Exemple 6

On procède comme dans l'exemple 2 et on lave le produit brut trois fois dans l'éthanol (le volume d'éthanol est supérieur à 4 L/kg de pigment). Le pigment est séché sous vide à 100°C. On lave une dernière fois à l'eau dans les proportions 1 kg/L et on mesure la DCO de l'eau de lavage : on obtient 1990 mg O₂/L.

### Exemple 7

On mélange et on broie à l'abri de l'air 50 g de zéolithe A séchée, 13,75 g de Na₂S anhydre, 28 g de soufre et 1,5 g de NaOH. Le mélange est chauffé sous vide dans une enceinte étanche à 600°C pendant 96h. Après le refroidissement et le lavage à l'eau, le pigment est bleu intense.

Selon un troisième aspect, l'invention concerne un pigment outremer obtenu par la mise en oeuvre du procédé de synthèse décrit, ledit pigment outremer présentant une teneur en fer inférieure ou égale à 200 ppm.

Les pigments outremers connus se caractérisent par une teneur en fer proche de 1000 ppm, due au contenu relativement élevé en fer des matières premières utilisées dans la synthèse.

Le procédé de synthèse de pigments outremers présente de nombreux avantages :
- il permet d'obtenir des pigments outremers bleus et verts dont la teinte et la force colorante sont comparables à celles des pigments industriels ;
- il permet de synthétiser un pigment bleu ou un pigment vert en ne modifiant que les proportions des réactifs ;
- il permet de recycler les matières premières et de les réutiliser dans la synthèse de pigments outremers ;
- il permet de synthétiser un pigment outremer sans rejet polluant sous forme de gaz ou liquide ;
- il permet de synthétiser un pigment outremer bleu sous vide, sous air sec ou sous atmosphère inerte, en une seule étape.

## Revendications

1. Procédé de synthèse de pigments outremers par calcination en une seule étape et à l'abri de l'air d'un mélange comprenant de la zéolithe A, du sulfure de sodium et du soufre **caractérisé en ce que** :
- la zéolithe A est séchée au préalable jusqu'à une teneur en eau inférieure à 10% en poids, de préférence inférieure à 1% en poids, et
- les réactifs dudit mélange sont mélangés à l'abri de l'air, et
- le milieu de réaction est exempt d'eau.

2. Procédé selon la revendication 1 **caractérisé en ce que** ledit mélange comprend de la zéolithe A, éventuellement du sulfure de sodium et/ou du soufre, et des polysulfures de sodium de composition formelle Na₂Sₙ n étant un nombre supérieur à 1, le produit résultant de la réaction de calcination étant refroidi ou laissé refroidir à l'abri de l'air, conduisant à l'obtention d'un produit brut qui comprend les pigments outremers synthétisés, des polysulfures et éventuellement du soufre, et **en ce que** les polysulfures Na₂Sₙ participant à la réaction de calcination proviennent au moins en partie du recyclage des polysulfures et éventuellement du soufre présents en excès dans ledit produit brut.

3. Procédé selon l'une quelconque des revendications 1 et 2 **caractérisé en ce que** le mélange réactionnel comprend du sulfure de sodium anhydre.

4. Procédé selon l'une quelconque des revendications précédentes, **caractérisé en ce que** la température de calcination est comprise entre 500°C et 1000°C.

5. Procédé selon l'une quelconque des revendications précédentes **caractérisé en ce que** la zéolithe séchée est gardée à l'abri de l'humidité jusqu'à la calcination.

6. Procédé selon l'une quelconque des revendications 1 à 5, **caractérisé en ce que** le mélange réactionnel se **caractérise par** :
o un rapport massique S/Na* compris entre 0,87 et 1,74 (Na* étant Na du Na₂S) et
o les pourcentages massiques suivants :
▪ Na₂S/zéolithe > 9% et
▪ S/zéolithe > 1%.

7. Procédé selon la revendication 6 **caractérisé en ce que** le temps de calcination est d'au moins 10h.

8. Procédé selon l'une quelconque des revendications 1 à 5, **caractérisé en ce que** le mélange réactionnel se **caractérise par** :
∘ un rapport massique S/Na* supérieur à 1,74 ;
∘ les pourcentages massiques suivants :
▪ 9% < Na₂S/zéolithe et
▪ 5,6% < S/zéolithe.

9. Procédé selon la revendication 8 **caractérisé en ce que** le temps de calcination est d'au moins 12h.

10. Procédé selon l'une quelconque des revendications 1 à 5, 8 et 9, **caractérisé en ce que** le mélange réactionnel comprend des ions hydroxyde, le pourcentage massique ions hydroxyde/zéolithe étant compris entre 0% et 5%.

11. Procédé selon l'une quelconque des revendications 1 à 10 **caractérisé en ce que** la réaction de calcination a lieu dans une enceinte étanche sous vide, sous gaz inerte ou sous air sec, ou dans une enceinte non fermée sous flux continu de gaz inerte.

12. Procédé selon l'une quelconque des revendications 2 à 11 **caractérisé en ce que** le recyclage des polysulfures et éventuellement du soufre présents dans le produit brut comprend les étapes suivantes réalisées de préférence à l'abri de l'air :
- solubilisation des polysulfures présents dans le produit brut par lavage dudit produit brut avec un solvant non aqueux ;
- séparation du pigment outremer synthétisé, en suspension dans ledit solvant chargé en polysulfures ;
- évaporation dudit solvant permettant d'obtenir un mélange de polysulfures et de soufre sous forme solide.

13. Procédé selon la revendication 12 **caractérisé en ce que** le solvant apte à solubiliser les polysulfures présents dans le produit brut est sélectionné dans le groupe : acétone, acétonitrile, ammoniac, disulfure de carbone, diméthylsulfoxyde, éthanol, méthanol, pyridine, tétrahydrofurane, diméthylformamide, propanol.

14. Procédé selon la revendication 13 **caractérisé en ce que** ledit solvant est utilisé à l'état anhydre.

15. Procédé selon l'une quelconque des revendications 12 à 14 **caractérisé en ce que** le solvant évaporé est récupéré et recyclé dans le procédé.

## Patentansprüche

1. Verfahren zur Herstellung von Ultramarin-Pigmenten durch Kalzinieren einer Mischung aus Zeolith A, Natriumsulfid und Schwefel in einem einzigen Schritt und unter Ausschluss von Luft, **dadurch gekennzeichnet, dass**
- der Zeolith A auf einen Wassergehalt von weniger als 10 Gew.-%, vorzugsweise weniger als 1 Gew.-%, vorgetrocknet wird und
- die Reagenzien der Mischung unter Ausschluss von Luft gemischt werden und
- das Reaktionsmedium frei von Wasser ist.

2. Verfahren nach Anspruch 1, **dadurch gekennzeichnet, dass** die Mischung Zeolith A, gegebenenfalls Natriumsulfid und/oder Schwefel, und Natriumpolysulfide der formalen Zusammensetzung Na₂Sₙ umfasst, wobei n eine Zahl größer als 1 ist, wobei das aus der Kalzinierungsreaktion resultierende Produkt gekühlt oder unter Ausschluss von Luft abkühlen gelassen wird, was zur Gewinnung eines Rohprodukts führt, das synthetisierte Ultramarin-Pigmente, Polysulfide und gegebenenfalls Schwefel umfasst, und dass die an der Kalzinierungsreaktion beteiligten Polysulfide Na₂Sₙ zumindest teilweise aus dem Recycling der Polysulfide und gegebenenfalls aus dem Schwefel stammen, die in dem Rohprodukt überschüssig vorhanden sind .

3. Verfahren nach einem der Ansprüche 1 und 2 **dadurch gekennzeichnet, dass** die Reaktionsmischung wasserfreies Natriumsulfid umfasst.

4. Verfahren nach einem der vorangehenden Ansprüche, **dadurch gekennzeichnet, dass** die Kalzinierungstemperatur zwischen 500 und 1000 °C liegt.

5. Verfahren nach einem der vorangehenden Ansprüche, **dadurch gekennzeichnet, dass** der getrocknete Zeolith bis zur Kalzinierung frei von Feuchtigkeit gehalten wird.

6. Verfahren nach einem der Ansprüche 1 bis 5, **dadurch gekennzeichnet, dass** die Reaktionsmischung **gekennzeichnet ist durch**:
o ein Massenverhältnis S/Na* zwischen 0,87 und 1,74 (wobei Na* das Na von Na₂S ist) und
∘ die folgenden Massenprozentsätze:
▪ Na₂S/Zeolith > 9 % und
▪ S/Zeolith > 1 %.

7. Verfahren nach Anspruch 6, **dadurch gekennzeichnet, dass** die Kalzinierungszeit mindestens 10 Stunden beträgt.

8. Verfahren nach einem der Ansprüche 1 bis 5, **dadurch gekennzeichnet, dass** die Reaktionsmischung **gekennzeichnet ist durch**:
o ein Masseverhältnis S/Na* von mehr als 1,74,
o die folgenden Massenprozentsätze:
▪ 9 % < Na₂S/Zeolith und
▪ 5,6 % < S/Zeolith.

9. Verfahren nach Anspruch 8, **dadurch gekennzeichnet, dass** die Kalzinierungszeit mindestens 12 Stunden beträgt.

10. Verfahren nach einem der Ansprüche 1 bis 5, 8 und 9, **dadurch gekennzeichnet, dass** die Reaktionsmischung Hydroxidionen umfasst, wobei der Massenanteil Hydroxidionen/Zeolith zwischen 0 % und 5 % liegt.

11. Verfahren nach einem der Ansprüche 1 bis 10, **dadurch gekennzeichnet, dass** die Kalzinierungsreaktion in einem abgedichteten Gehäuse unter Vakuum, Inertgas oder Trockenluft oder in einem nicht geschlossenen Gehäuse unter kontinuierlichem Inertgasstrom stattfindet.

12. Verfahren nach einem der Ansprüche 2 bis 11, **dadurch gekennzeichnet, dass** das Recycling der Polysulfide und gegebenenfalls des Schwefels, die im Rohprodukt vorhanden sind, die folgenden Schritte umfasst, die vorzugsweise unter Ausschluss von Luft durchgeführt werden:
- Solubilisieren der im Rohprodukt vorhandenen Polysulfide durch Waschen des Rohprodukts mit einem nichtwässrigen Lösungsmittel,
- Abtrennen des synthetisierten Ultramarin-Pigments in Suspension in dem mit Polysulfid beladenen Lösungsmittel,
- Verdampfen des Lösungsmittels, um eine Mischung aus Polysulfiden und Schwefel in fester Form zu erhalten.

13. Verfahren nach Anspruch 12, **dadurch gekennzeichnet, dass** das Lösungsmittel, das in der Lage ist, die im Rohprodukt vorhandenen Polysulfide zu lösen, ausgewählt ist aus der Gruppe bestehend aus: Aceton, Acetonitril, Ammoniak, Kohlenstoffdisulfid, Dimethylsulfoxid, Ethanol, Methanol, Pyridin, Tetrahydrofuran, Dimethylformamid, Propanol.

14. Verfahren nach Anspruch 13, **dadurch gekennzeichnet, dass** das Lösungsmittel im wasserfreien Zustand verwendet wird.

15. Verfahren nach einem der Ansprüche 12 bis 14, **dadurch gekennzeichnet, dass** das verdampfte Lösungsmittel in dem Verfahren zurückgewonnen und recycelt wird.

## Claims

1. An ultramarine pigments synthesis process by the calcination in a single step in the absence of air of a mixture comprising zeolite A, sodium sulfide and sulfur, **characterized in that**:
- the zeolite A is dried in advance to a water content lower than 10% by weight, preferably lower than 1% by weight, and
- the reagents of said mixture are mixed in the absence of air, and
- the reaction medium is free of water.

2. A process according to claim 1, **characterized in that** the aforesaid mixture comprises zeolite A, possibly sodium sulfide and/or sulfur, and sodium polysulfides of the composition Na₂Sₙ, n being a number greater than 1, the product resulting from the calcination reaction being cooled or allowed to cool in the absence of air, leading to obtaining a raw product which comprises the synthesized ultramarine pigments, polysulfides and possibly sulfur, and **characterized in that** the Na₂Sₙ polysulfides taking part in the calcination reaction come at least in part from the recycling of the polysulfides and possibly of the sulfur present in excess in the aforesaid raw product.

3. A process according to either of the claims 1 and 2, **characterized in that** the reaction mixture comprises anhydrous sodium sulfide.

4. A process according to any of the preceding claims, **characterized in that** the calcination temperature lies between 500 °C and 1000 °C.

5. A process according to any of the preceding claims, **characterized in that** the dried zeolite is kept away from moisture until calcination.

6. A process according to any of the claims 1 to 5, **characterized in that** the reaction mixture is **characterized by**:
- a S/Na* weight ratio ranging between 0.87 and 1.74 (Na* being Na of Na₂S), and
- the following weight percentages:
∘ Na₂S/zeolite > 9%, and
∘ S/zeolite > 1%.

7. A process according to claim 6, **characterized in that** the calcination time is at least 10 h.

8. A process according to any of the claims 1 to 5, **characterized in that** the reaction mixture is **characterized by**:
- a S/Na* weight ratio greater than 1.74;
- the following weight percentages:
∘ Na₂S/zeolite > 9%, and
∘ S/zeolite > 5.6%.

9. A process according to claim 8, **characterized in that** the calcination time is at least 12 h.

10. A process according to any of the claims 1 to 5, 8 and 9, **characterized in that** the reaction mixture comprises hydroxide ions, the hydroxide ion/zeolite weight percentage lying between 0% and 5%.

11. A process according to any of the claims 1 to 10, **characterized in that** the calcination reaction takes place in a leakproof vessel under a vacuum, under an inert gas or under dry air, or in an open vessel under continuous inert gas flux.

12. A process according to any of the claims 2 to 11, **characterized in that** the recycling of the polysulfides and possibly of the sulfur present in the raw product comprises the following steps, preferably carried out in the absence of air:
- solubilization of the polysulfides present in the raw product by washing the aforesaid raw product with a non-aqueous solvent;
- separation of the synthesized ultramarine pigment in suspension in the aforesaid solvent loaded in polysulfides;
- evaporation of the aforesaid solvent making it possible to obtain a mixture of polysulfides and of sulfur in a solid form.

13. A process according to claim 12, **characterized in that** the solvent capable of solubilizing the polysulfides present in the raw product is selected from the group: acetone, acetonitrile, ammonia, carbon disulfide, dimethylsulfoxide, ethanol, methanol, pyridine, tetrahydrofuran, dimethylformamide, propanol.

14. A process according to claim 13, **characterized in that** the aforesaid solvent is used in an anhydrous state.

15. A process according to any of the claims 12 to 14, **characterized in that** the evaporated solvent is recovered and recycled in the process.
